# FASCICULE DE BREVET EUROPEEN

(11) **EP 0 912 312 B1**
(45) Date de publication et mention de la délivrance du brevet: **04.09.2002**
(21) Numéro de dépôt: 97930601.6
(22) Date de dépôt: 26.06.1997
(51) Int. Cl.: B29C 41/22, B29C 41/46

(54) **PROCEDE D'OBTENTION D'UN OBJET MOULE AYANT UNE SURFACE MODIFIEE**
VERFAHREN ZUM HERSTELLEN VON GEFORMTEN GEGENSTÄNDEN MIT MODIFIZIERTER OBERFLÄCHE
METHOD FOR OBTAINING A MOULDED OBJECT HAVING A MODIFIED SURFACE

(30) Priorité: 02.07.1996 FR 9608225
(43) Date de publication de la demande: 06.05.1999
(73) Titulaire: Atofina, 92800 Puteaux (FR)
(72) Inventeur: BRIOUDE, Michel, F-69000 Lyon (FR); SAKKAS, Démosthène, F-60500 Chantilly (FR)
(86) Numéro de dépôt international: FR9701148
(87) Numéro de publication internationale: WO98000277

(56) Documents cités:
- EP-A- 0 365 488
- FR-A- 2 364 763
- FR-A- 2 387 754
- US-A- 2 880 467
- US-A- 3 315 016
- US-A- 3 728 429

## Description

La présente invention concerne un procédé d'obtention d'un objet moulé, à base de résine thermoplastique, ayant une surface modifiée. Plus particulièrement elle concerne un procédé de modification de surface d'un objet, à base de résine thermoplastique lors de sa fabrication par des techniques de moulage.

Par surface modifiée, on entend une surface dont la composition est différente de celle de la matrice.

Les objets moulés à base de résine thermoplastique, en particulier les peaux sont utilisés principalement dans l'industrie automobile comme tableaux de bord, appui-tête, dans la maroquinerie ou dans l'industrie en général.

L'obtention par les procédés actuels d'une grande variété d'objets moulés à base d'une résine thermoplastique, se différenciant l'une de l'autre que par la composition de surface de l'objet comme par exemple la nature du pigment, nécessitent l'utilisation de plusieurs charges différentes avec ou sans masque (double-slush). De plus, la durée d'un cycle (temps nécessaire pour la fabrication complète d'un objet) est élevée.

Un procédé d'obtention d'objets à base de résine thermoplastique est connu du document US-A-2 880 467, selon lequel on dépose sur la surface d'un moule une composition A comprenant au moins un plastifiant, on gélifie partiellement ladite composition A, on dépose ensuite sur le moule revêtu une composition B comprenant un mélange de résines, puis on chauffe le moule pour gélifier l'ensemble.

II a maintenant été trouvé un procédé permettant l'obtention d'une grande variété d'objets moulés à l'aide d'un nombre réduit de charges par exemple une seule charge et qui ,en outre, offre l'avantage d'avoir une durée de cycle de fabrication courte, et d'assurer un mélange intime de la couche de surface avec la matrice.

Ce procédé est caractérisé en ce qu'il comprend les étapes suivantes :
(i) on dépose sur la surface d'un moule, une composition A comprenant au moins un plastifiant et éventuellement un ou plusieurs agent(s) modifiant(s) ;
(ii) on dépose ensuite sur le moule totalement ou partiellement revêtu en (i), une composition B comprenant essentiellement une résine thermoplastique ou un mélange de résines thermoplastiques ;
(iii) on chauffe progressivement le moule pour permettre l'absorption de la composition A par la couche de composition B, puis rapidement jusqu'à la température de gélification de la résine thermoplastique ou du mélange ;
(iv) puis éventuellement on redépose la composition B sur le moule chauffé en (iii).

Après gélification de la résine thermoplastique ou du mélange de résines thermoplastiques, le moule est refroidi et on obtient un objet dont la surface est partiellement ou totalement modifiée.

On entend par agent modifiant, tout composé susceptible de modifier la surface des objets moulés notamment les pigments, les paillettes décoratives, les agents d'expansion, les agents anti-UV, les agents de stabilisation thermique et les résines thermoplastiques.

Les résines thermoplastiques peuvent être choisies parmi le polychlorure de vinyle, le polychlorure de vinyle chloré (CPVC), les copolymères de chlorure de vinyle par exemple les copolymères de chlorure de vinyle et d'acétate de vinyle, le polyfluorure de vinylidène, les polyamides tels que le polyamide 11 et le polyamide 12, le polyéthylène haute densité et le polymethacrylate de méthyle.

Avantageusement, on choisit le polychlorure de vinyle chloré et le polymethacrylate de méthyle et les copolymères de chlorure de vinyle et d'acétate de vinyle.

Les pigments utilisés peuvent être aussi bien organiques, que minéraux. On peut citer à titre d'exemple, le dioxyde de titane, le pigment rouge cromo BRN de CIBA, le pigment bleu GLSM, le jaune Irgalithe BRM et l'orange thiosol GL.

Les paillettes sont utilisées en général pour rendre l'objet plus esthétique. La teneur en paillettes dans l'objet fabriqué est généralement comprise entre environ 5 et environ 50 g/cm². On utilise de préférence les paillettes à base de polychlorure de vinyle obtenu par calandrage.

Les agents anti-UV peuvent être choisis parmi les benzotriazoles et les cyanoacrylates.

Comme agent de stabilisation thermique, on peut citer à titre d'exemple les sels métalliques notamment ceux de calcium, de zinc, d'étain; les complexes à base d'aluminium, de potassium ou de sodium.

Comme agent d'expansion, on utilise en général ceux qui se décomposent à une température voisine de la température de gélification ; par exemple les dérivés nitroso tels que la N,N'-dinitrosopentaméthylènetetramine ou la N,N'-diméthyl-N,N'-dinitrosotéréphtalamide, les composés azo tels que l'azodicarbonamide, l'azobisisobutyronitrile ou l'azodicarboxylate de barium, ou d'autres composés comme le bicarbonate de sodium ou l'hydrazide sulphonyle de benzène ou de toluène.

L'azodicarbonamide est avantageusement utilisé.

On utilise en général un plastifiant ou un mélange de plastifiants compatible avec la résine thermoplastique de la composition B et/ou de la composition A. Le plastifiant peut être choisi parmi les esters formés à partir d'alcool supérieur et d'acide organique tel que l'acide trimellitique, l'acide oléique ou l'acide sébacique comme notamment le trimellitate d'octyle, ou parmi les phtalates tels que le dioctyl phtalate, le nonyl undecyl phtalate ou parmi les adipates tel que le dioctyl adipate, ou parmi les phosphates tel que le phosphate de tricresyle.

Le plus souvent, on utilise les phtalates et les trimellitates en particulier le trimellitate d'octyle.

La composition A, en général préparée par simple mélange des différents ingrédients, peut être déposée à la surface d'un moule à une température comprise entre la température ambiante et environ 100° C.

On utilise le plus souvent une température comprise entre environ 40° C et environ 70° C.

La composition A peut être déposée sur le moule par des méthodes adaptées telles que pulvérisation, tamponnage ou à l'aide d'un pinceau.

La composition B se présente de préférence sous forme de poudre. Elle comprend essentiellement une résine thermoplastique ou un mélange de résines thermoplastiques choisie(s) parmi le polychlorure de vinyle, le polychlorure de vinyle chloré (CPVC), les copolymères de chlorure de vinyle par exemple les copolymères de chlorure de vinyle et d'acétate de vinyle, le polyfluorure de vinylidène, les polyamides tels que le polyamide 11 et le polyamide 12, le polyéthylène haute densité et le polymethacrylate de méthyle.

Le polychlorure de vinyle et les polyamides sont particulièrement préférés. Le polychlorure de vinyle peut être avantageusement préparé par la polymérisation en masse ou en suspension.

La composition B peut comprendre en outre des pigments, des plastifiants, des agents de stabilisation thermique ou agents anti-UV.

Cette composition B peut être déposée sur le moule suivant les techniques usuelles de moulage comme le pistolage, le rotomoulage et le "slush-moulding" ou l'embouage.

Le dépôt d'une poudre sur le moule basé sur l'effet électrostatique est connu sous le nom de pistolage.

Dans le cas du rotomoulage, une quantité strictement nécessaire de poudre est introduite dans le moule et par des mouvements de rotation, la poudre se dépose sur la surface du moule. Lorsqu'on introduit dans le moule une quantité de poudre supérieure à celle nécessaire pour le dépôt par rotation, la quantité excédentaire après dépôt de la poudre sur le moule est alors éliminée par gravité. Cette technique est connue sous le nom de "slush-moulding" ou de l'embouage.

Cette dernière technique de dépôt est particulièrement préférée.

En "slush-moulding", la composition B est déposée sur le moule totalement ou partiellement revêtu de la composition A par rotation de l'ensemble du dispositif qui comprend le moule ainsi que le réservoir de la composition B. Le nombre de rotations du dispositif est choisi en fonction de l'épaisseur de la couche dans laquelle on souhaite retrouver l'agent modifiant.

On opère en général à la même température que l'étape (i) pour cette première série de rotations.

Puis, on augmente progressivement la température du moule pour permettre l'absorption du plastifiant et de l'agent modifiant par la couche de composition B déposée sur le moule. Ensuite, on augmente rapidement la température jusqu'à gélification de la résine thermoplastique.

On entend par augmentation progressive de la température, une vitesse de chauffe au plus égale à 25° C par minute et par augmentation rapide, une vitesse de chauffe correspondant à la puissance maximale de l'installation.

La température de gélification est en général comprise entre environ 160° C et environ 290° C. Elle est choisie en fonction de la nature de la résine thermoplastique à transformer. Ainsi pour les polychlorure de vinyle elle est avantageusement comprise entre environ 180° C et environ 240° C, et pour les polyamides elle est de préférence comprise entre environ 210 et environ 270° C.

A la température de gélification, on peut soit procéder à une nouvelle série de rotations du dispositif soit attendre la gélification totale de la résine thermoplastique avant de refroidir le moule.

Tout type de moule permettant un chauffage progressif en présence d'une résine thermoplastique peut convenir pour le procédé selon la présente invention. Avantageusement, on utilise les moules à double-enveloppe avec circulation d'un fluide caloporteur.

Le procédé selon la présente invention peut être utilisé dans la décoration, la pigmentation avec une économie d'ingrédients. Il permet également d'améliorer le toucher de la surface des objets ainsi fabriqués. En outre ce procédé permet l'utilisation directe des différents ingrédients entrant dans la composition de l'objet fabriqué sans malaxage préalable. De plus il permet d'améliorer l'adhérence entre deux couches à base de résine thermoplastique différente. L'invention sera mieux comprise à l'aide des exemples suivants.

### Partie expérimentale

### Exemple 1

On prépare une composition A en mélangeant 95 parties en poids de trimellitate d'octyle avec 5 parties du pigment rouge chromophtal BRN.

On prépare une composition B en malaxant 100 parties de polychlorure de vinyle obtenu par la polymérisation en masse et 10 parties de polychlorure de vinyle obtenu par la polymérisation en émulsion avec 6 parties d'huile de soja epoxydée, 75 parties de nonyl undecylphtalate, 6,5 parties d'un mélange d'agent stabilisant thermique et 2,4 parties d'un pigment.

On enduit ensuite la surface intérieure d'un moule avec la composition A à une température voisine de 50° C, puis on ajuste le réservoir contenant la composition B sur le moule à double-enveloppe. On démarre alors la rotation de l'ensemble du dispositf comprenant le moule revêtu et le réservoir. Après trois tours complets du dispositif, on arrête la rotation, puis on chauffe progressivement le moule pour atteindre 100° C en 3 minutes. Lorsque la température du moule est à 100 ° C, on augmente rapidement la température de façon à atteindre 210°C en 4 minutes.

On procède ensuite à une nouvelle série de rotation du dispositif et au bout de 6 tours complets on arrête la rotation. On laisse le moule à 210° C pour une durée supplémentaire de 2 minutes avant de couper le chauffage et refroidir le moule à l'aide d'une circulation d'eau froide.

Lorsque le moule est refroidi, on enlève le réservoir et on démoule l'objet.

### Exemple 2

On opère comme décrit à l'exemple 1 sauf que la composition A est préparée à partir de 90 parties en poids de di-éthylhexyl phtalate et 10 parties de paillettes de polychlorure de vinyle rigide calandré et broyé.

### Exemple 3

On opère comme décrit à l'exemple 1 sauf que la composition A est préparée à partir de 97 parties de trimellitate d'octyle et 3 parties d'une poudre de polychlorure de vinyle préalablement pigmentée.

### Exemple 4

On opère comme décrit à l'exemple 1 sauf que la composition A est préparée à partir de 90 parties en poids de di-ethylhexyl phtalate et 10 parties de pigment or.

### Exemple 5

On opère comme décrit à l'exemple 1 sauf que la composition A est préparée à partir de 96 parties en poids de di-ethylhexyl phtalate et 4 parties d'un stabilisant UV du type cyanoacrylate.

### Exemple 6

On opère comme décrit à l'exemple 5 sauf que le stabilisant UV est du type benzotriazole.

### Exemple 7

On opère comme décrit à l'exemple 1 sauf que la composition B est préparée en mélangeant 100 parties de polychlorure de vinyle (masse) et 3 parties de polychlorure de vinyle (émulsion) avec 6 parties d'huile de soja epoxydée, 15 parties de trimellitate d'octyle, 3 parties d'un mélange de stabilisant thermique, et 0,2 partie de pigment et que la composition A ne contient que du trimellitate d'octyle.

### Exemple 8

On opère comme décrit à l'exemple 1 sauf que la composition A contient 98 parties en poids de trimellitate d'octyle et 2 parties d'azodicarbonamide et que la composition B est préparée en mélangeant 100 parties de polychlorure de vinyle ( masse ) et 9 parties de polychlorure de vinyle ( émulsion ) avec 100 parties de nonyl undecyl phtalate, 1,5 parties de thioglycolate d'étain et 2,5 parties de pigments.

### Exemple 8 bis

On opère comme décrit à l'exemple 1 sauf que la composition A contient 2 parties en poids de polychlorure de vinyle dissous dans 98 parties de trimellitate d'octyle.

### Exemple 9

On opère comme décrit à l'exemple 1 sauf que la composition A contient 20 parties en poids de polymethacrylate de méthyle dissous dans 80 parties de trimellitate d'octyle.

### Exemple 10

On opère comme décrit à l'exemple 1 sauf que la composition A contient 51 parties de trimellitate d'octyle, 31 parties d'un copolymère de chlorure de vinyle ( 89 % polychlorure de vinyle et 11 % acétate de vinyle) et 18 parties d'un mélange d'agent stabilisant thermique.

### Exemple 11

On opère comme décrit à l'exemple 1 sauf que la composition A contient 40 parties en poids de trimellitate d'octyle, 50 parties de polychlorure de vinyle chlorée et 10 parties d'un mélange d'agent stabilisant thermique ( à préciser ).

### Exemple 12

On opère comme décrit à l'exemple 1 sauf que la composition A contient 96 parties en poids de trimellitate d'octyle, 3 parties de stearate de barium/zinc et 1 partie de pigment rouge chromophtal BRN et que la composition B ne contient que du polychlorure de vinyle ( masse ou suspension ). Dans ce cas on ne procède pas à une nouvelle série de rotations du dispositif et après refroidissement et démoulage on obtient une peau d'une épaisseur d'environ 0,1 mm.

### Exemple 13

On opère comme décrit à l'exemple 1 sauf que la composition B ne contient que la résine polyamide ARUO 950 TLD (Elf Atochem) et que le moule est chauffé rapidement de 100° C pour atteindre 270 ° C en 10 minutes et ensuite maintenu à cette température pendant 2 minutes.

### Exemple 14

On opère comme décrit à l'exemple 1 sauf que la composition A ne contient que du trimellitate d'octyle et que la composition B contient :
100 parties de polychlorure de vinyle ( masse )
3 parties de polychlorure de vinyle (émulsion)
6 parties huile de soja epoxydée
15 parties de plastifiant ( trimellitate d'octyle )
3 parties d'un mélange de stabilisant thermique
0,2 parties de pigments

## Revendications

1. Procédé d'obtention d'objets, à base de résine thermoplastique, comprenant les étapes suivantes :
(i) on dépose sur la surface d'un moule, une composition A comprenant au moins un plastifiant et éventuellement un ou plusieurs agent(s) modifiant(s) ;
(ii) on dépose ensuite sur le moule totalement ou partiellement revêtu en (i), une composition B comprenant une résine thermoplastique ou un mélange de résines thermoplastiques ;
(iii) on chauffe progressivement le moule pour permettre l'absorption de la composition A par la couche de composition B, puis rapidement jusqu'à la température de gélification de la résine thermoplastique ou du mélange ;
(iv) puis éventuellement on redépose la composition B sur le moule chauffé en (iii).

2. Procédé selon la revendication 1 **caractérisé en ce que** l'agent modifiant est choisi parmi les pigments, les paillettes décoratives, les agents d'expansion, les agents anti-U.V., les agents de stabilisation thermique et les résines thermoplastiques.

3. Procédé selon la revendication 1 ou 2 **caractérisé en ce que** le plastifiant est un phtalate ou un trimellitate.

4. Procédé selon l'une quelconque des revendications 1 à 3 **caractérisé en ce que** la résine thermoplastique de la composition B est choisi parmi le polychlorure de vinyle, le polychlorure de vinyle chloré (CPVC), les copolymères de chlorure de vinyle par exemple les copolymères de chlorure de vinyle et d'acétate de vinyle, le polyfluorure de vinylidène, les polyamides tels que le polyamide 11 et le polyamide 12, le polyéthylène haute densité et le polyméthacrylate de méthyle.

5. Procédé selon l'une quelconque des revendications 1 à 4 **caractérisé en ce que** l'on opère à une température comprise entre 40°C et 70°C pour l'étape (i).

6. Procédé selon l'une quelconque des revendications 1 à 5 **caractérisé en ce que** la température de gélification est comprise entre 160°C et 290°C.

7. Procédé selon la revendication 6 **caractérisé en ce que** la température est comprise entre 180°C et 240°C.

8. Procédé selon la revendication 6 **caractérisé en ce que** la température est comprise entre 210°C et 270°C.

9. Procédé selon l'une quelconque des revendications 1 à 8 **caractérisé en ce que** l'on utilise la technique de l'embouage.

## Claims

1. Process for obtaining articles, based on a thermoplastic resin, comprising the following steps:
(i) a composition A, comprising at least one plasticizer and optionally one or more modifiers, is deposited on the surface of a mould;
(ii) next, a composition B, comprising a thermoplastic resin or a blend of thermoplastic resins, is deposited on the mould completely or partially coated in (i);
(iii) the mould is heated progressively, in order to allow composition A to be absorbed by the layer of composition B, and then rapidly up to the gelling temperature of the thermoplastic resin or of the blend;
(iv) and then, optionally, composition B is redeposited on the mould heated in (iii).

2. Process according to Claim 1, **characterized in that** the modifier is chosen from pigments, decorative flakes, blowing agents, UV stabilizers, heat stabilizers and thermoplastic resins.

3. Process according to Claim 1 or 2, **characterized in that** the plasticizer is a phthalate or a trimellitate.

4. Process according to any one of Claims 1 to 3, **characterized in that** the thermoplastic resin of composition B is chosen from polyvinyl chloride, chlorinated polyvinyl chloride (CPVC), vinyl chloride copolymers, for example vinyl chloride/vinyl acetate copolymers, polyvinylidene fluoride, polyamides, such as nylon-11 and nylon-12, high-density polyethylene and polymethyl methacrylate.

5. Process according to any one of Claims 1 to 4, **characterized in that** it is carried out at a temperature of between 40°C and 70°C in the case of step (i).

6. Process according to any one of Claims 1 to 5, **characterized in that** the gelling temperature is between 160°C and 290°C.

7. Process according to Claim 6, **characterized in that** the temperature is between 180°C and 240°C.

8. Process according to Claim 6, **characterized in that** the temperature is between 210°C and 270°C.

9. Process according to any one of Claims 1 to 8, **characterized in that** the technique of slush moulding is used.

## Patentansprüche

1. Verfahren zur Herstellung von Gegenständen auf der Basis eines thermoplastischen Harzes mit den folgenden Schritten:
(i) eine Zusammensetzung A, die mindestens einen Weichmacher und gegebenenfalls ein oder mehrere Mittel zur Modifizierung enthält, wird auf die Oberfläche einer Form gebracht;
(ii) dann wird eine Zusammensetzung B, die ein thermoplastisches Harz oder ein Gemisch von thermoplastischen Harzen enthält, in die in Schritt (i) ganz oder teilweise bedeckte Form gegeben;
(iii) die Form wird allmählich erwärmt, damit die Zusammensetzung A von der Schicht der Zusammensetzung B absorbiert werden kann, worauf schnell bis zur Gelbildungstemperatur des thermoplastischen Harzes oder des Gemisches erwärmt wird; und
(iv) dann wird gegebenenfalls nochmals die Zusammensetzung B in die in Schritt (iii) erwärmte Form gegeben.

2. Verfahren nach Anspruch 1, **dadurch gekennzeichnet, daß** es sich bei dem Mittel zur Modifizierung um Pigmente, dekorative Plättchen, Expansionsmittel, UV-Filter, Mittel zur thermischen Stabilisierung und thermoplastische Harze handelt.

3. Verfahren nach Anspruch 1 oder 2, **dadurch gekennzeichnet, daß** der Weichmacher ein Phthalat oder ein Trimellitat ist.

4. Verfahren nach einem der Ansprüche 1 bis 3, **dadurch gekennzeichnet, daß** das thermoplastische Harz der Zusammensetzung B unter Polyvinylchlorid, chloriertem Polyvinylchlorid (CPVC), Copolymeren von Vinylchlorid, beispielsweise den Copolymeren von Vinylchlorid und Vinylacetat, Polyvinylidenfluorid, Polyamiden, beispielsweise Polyamid 11 und Polyamid 12, Polyethylen mit hoher Dichte und Polymethylmethacrylat ausgewählt ist.

5. Verfahren nach einem der Ansprüche 1 bis 4, **dadurch gekennzeichnet, daß** in Schritt (i) bei einer Temperatur im Bereich von 40 bis 70 °C gearbeitet wird.

6. Verfahren nach einem der Ansprüche 1 bis 5, **dadurch gekennzeichnet, daß** die Gelbildungstemperatur im Bereich von 160 bis 290 °C liegt.

7. Verfahren nach Anspruch 6, **dadurch gekennzeichnet, daß** die Temperatur im Bereich von 180 bis 240 °C liegt.

8. Verfahren nach Anspruch 6, **dadurch gekennzeichnet, daß** die Temperatur im Bereich von 210 bis 270 °C liegt.

9. Verfahren nach einem der Ansprüche 1 bis 8, **dadurch gekennzeichnet, daß** ein Ausgießverfahren angewandt wird.
